# EUROPÄISCHE PATENTANMELDUNG

(11) **EP 1 577 580 A2**
(43) Veröffentlichungstag der Anmeldung: **21.09.2005**
(21) Anmeldenummer: 05003352.1
(22) Anmeldetag: 17.02.2005
(51) Int. Cl.: F16F 9/06

(54) **Hydropneumatisches Federelement für Fahzeuge, insbesondere Kettenfahrzeuge, sowie Laufradaufhängung an einem Kettenfahrzeug mit einem derartigen Federelement**

(30) Priorität: 20.03.2004 DE 102004013768
(71) Anmelder: Krauss-Maffei Wegmann GmbH & Co. KG, 80997 München (DE)
(72) Erfinder: Wittmann, Christoph, Dipl.-Ing., 85221 Dachau (DE)
(74) Vertreter: Feder, Wolf-Dietrich

(57) **Zusammenfassung**

Ein hydropneumatisches Federelement für Fahrzeuge, insbesondere Kettenfahrzeuge, sowie eine Laufradaufhängung an einem Kettenfahrzeug mit einem derartigen Federelement. Das Federelement besitzt einen ersten Zylinder (1), der ein hydraulisches Dämpfungsglied (6) sowie einen ersten Abschnitt (4) einer Ölkammer und einen Teil einer Ölvorratskammer (7) enthält. In einem parallel zum ersten Zylinder (1) angeordneten zweiten Zylinder (1') sind ein zweiter Abschnitt (4') der Ölkammer, der Trennkolben (5) und die Gaskammer (3) angeordnet. Der erste Zylinder (1) ist mit dem zweiten Zylinder (1') über ein Verbindungselement (10) verbunden, welches eine hydraulische Verbindung (10.1) zwischen dem ersten Abschnitt (4) und dem zweiten Abschnitt (4') der Ölkammer enthält. Im ersten Zylinder (1) ist ein dritter Zylinder (2) teleskopartig und dichtend geführt, der den restlichen Teil der Ölvorratskammer (7) enthält. Durch eine Verschiebung des ersten Zylinders (1) und des dritten Zylinders (2) gegeneinander ist der Rauminhalt der Ölvorratskammer (7) veränderbar. Durch diese Anordnung lässt sich eine starke Baulängenverkürzung des Federelements erreichen, so dass es auch bei kleinem Einbauraum an der Laufradaufhängung eines Kettenfahrzeugs einsetzbar ist.

## Beschreibung

Die Erfindung betrifft ein hydropneumatisches Federelement für Fahrzeuge, insbesondere Kettenfahrzeuge, sowie eine Laufradaufhängung an einem Kettenfahrzeug mit einem derartigen Federelement.

Es sind grundsätzlich hydropneumatische Federelemente bekannt, welche die Merkmale aus dem Oberbegriff des Patentanspruchs 1 aufweisen und die weiter unten näher erläutert werden. Diese hydropneumatischen Federelemente sind als gestrecktes System aufgebaut und besitzen daher eine relativ große Baulänge.

Es hat sich nun herausgestellt, dass bei Kettenfahrzeugen, insbesondere Kampffahrzeugen mit Kettenlaufwerk, der Einbauraum im Bereich der Laufradaufhängung sehr begrenzt ist und es daher auf große Schwierigkeiten stößt, ein herkömmliches hydropneumatisches Federelement an einer derartigen Laufradaufhängung zu verwenden.

Der Erfindung liegt die Aufgabe zugrunde, ein hydropneumatisches Federelement mit den im Oberbegriff des Patentanspruchs 1 angegebenen Merkmalen so auszugestalten, dass sein Einbau in einer Laufradaufhängung an einem Kettenfahrzeug auch bei begrenztem Einbauraum möglich wird.

Weiterhin sollte der Ein- und Ausbau des hydropneumatischen Federelements an einer Laufradaufhängung erleichtert werden.

Die Lösung dieser Aufgabe erfolgt erfindungsgemäß mit einem hydropneumatischen Federelement, das die Merkmale aus dem kennzeichnenden Teil des Patentanspruchs 1 aufweist. Vorteilhafte Weiterbildungen der Erfindung sind in den abhängigen Ansprüchen 2 bis 4 beschrieben. Eine Laufradaufhängung an einem Kettenfahrzeug unter Verwendung des erfindungsgemäßen, hydropneumatischen Federelements ist Gegenstand von Patentanspruch 5. Vorteilhafte Weiterbildungen dieser Laufradaufhängung sind in den Patentansprüchen 6 bis 8 beschrieben.

Der Grundgedanke der Erfindung besteht darin, ausgehend von dem bekannten hydropneumatischen Federelement in der gestreckten Ausführungsform mit geometrisch hintereinander angeordnetem Federteil und Dämpfungsteil eine Aufteilung vorzusehen, bei welcher Federteil und Dämpfungsteil auf zwei parallel zueinander angeordnete Bauelemente verteilt sind. Hierdurch lässt sich eine beträchtliche Verkürzung der Gesamtbaulänge erreichen, die es nicht nur ermöglicht, das hydropneumatische Federelement nach der Erfindung bei Kettenfahrzeugen mit erheblich eingeschränktem Bauraum im Bereich der Laufradaufhängung einzusetzen, sondern diese Ausbildung ermöglicht auch den Einsatz des Federelements bei einem Kettenfahrzeug mit abgekoppeltem Laufwerk, und sie ermöglicht den Einsatz in Verbindung mit einem hydraulischen Endanschlag. In einer Weiterbildung des erfindungsgemäßen Federelements kann mindestens eine der zur Ankoppelung des Federelements an der Schwinge des Laufwerks bzw. am Fahrzeuggehäuse vorgesehenen Befestigungslaschen mit einem Kopfstück versehen sein, wie dies in Anspruch 4 dargestellt ist, wodurch sich die Montage und Demontage des Federelements unter ungünstigen Platzverhältnissen beträchtlich erleichtert.

Im folgenden wird anhand der beigefügten Zeichnungen ein Ausführungsbeispiel für ein hydropneumatisches Federelement nach der Erfindung sowie sein Einsatz an der Laufradaufhängung eines Kettenfahrzeugs näher erläutert.

In den Zeichnungen zeigen:
Fig. 1 ein hydropneumatisches Federelement nach der Erfindung in einer stark schematisierten Prinzipdarstellung;
Fig. 2 die Laufradaufhängung an einem Kettenfahrzeug mit einem hydropneumatischen Federelement nach Fig. 1;

Es wird zunächst der prinzipielle Aufbau eines hydropneumatischen Federelements nach dem Stand der Technik erläutert.

Bei einem typischen Aufbau eines derartigen bekannten, hydropneumatischen Federelements sind zwei zylindrische Rohrstücke teleskopartig ineinander verschiebbar geführt. In den Rohrstücken sind innerhalb des zylindrischen Raums eine Gaskammer und eine Ölkammer angeordnet, die durch einen in dem zylindrischen Raum abgedichtet und verschiebbar angeordneten Trennkolben voneinander getrennt sind. Die Ölkammer ist über ein im oder am Ende des zylindrischen Raums angeordnetes, hydraulisches Dämpfungsglied mit einer Ölvorratskammer verbunden, deren Innenraum in seiner Länge mittels der teleskopartig ineinander verschiebbar geführten, zylindrischen Rohrstücke veränderbar ist.

Die bekannte Funktionsweise eines derartigen hydropneumatischen Federelements besteht im Prinzip darin, dass beim Einfedern die zylindrischen Rohrstücke ineinandergeschoben werden, wodurch sich der Innenraum der Ölvorratskammer verkleinert und Hydrauliköl von der Ölvorratskammer durch das hydraulische Dämpfungsglied in die Ölkammer einströmt und den Trennkolben in der einen Richtung verschiebt. Die Abfederung geschieht dabei durch Zusammenpressen des in der Gaskammer vorhandenen Gases. Somit kann prinzipiell gesagt werden, dass der die Gaskammer und den Trennkolben enthaltende Bauteilabschnitt die eigentliche Feder darstellt, während der das hydraulische Dämpfungsglied enthaltende Bauteilabschnitt das Dämpfungselement bildet. Beim Ausfedern bewegen sich die zylindrischen Rohrstücke auseinander, wobei sich der Innenraum der Ölvorratskammer vergrößert und Hydrauliköl von der Ölkammer in die Ölvorratskammer durch das hydraulische Dämpfungsglied zurückströmt und sich der Trennkolben unter Ausdehnung des Volumens in der Gaskammer in der anderen Richtung bewegt.

Üblicherweise besitzt das bekannte hydropneumatische Federelement an seinen beiden Enden jeweils eine mit einem Durchgangsloch versehene Lasche als Ankoppelvorrichtung. Weiterhin sind vorgesehen ein Ein/Ausgang für die Gasfüllung der Gaskammer sowie ein Ein/Ausgang für die Zuführung und Abführung des Hydrauliköls und ggf. die Be/Entlüftung der Ölvorratskammer.

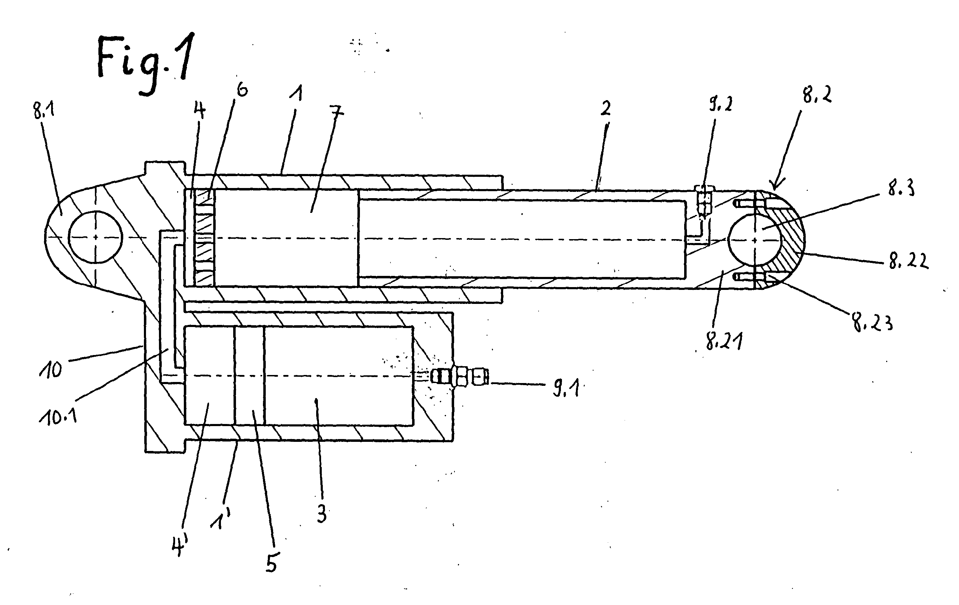

Fig. 1 zeigt nun, wie im Prinzip die Aufteilung der einzelnen Bauelemente des hydropneumatischen Federelements auf zwei parallel zueinander angeordnete Bauteile gedacht ist.

Das in Fig. 1 dargestellte Federelement ist in der Weise aufgebaut, dass ein erster Zylinder 1 einen ersten Abschnitt 4 der Ölkammer sowie das hydraulische Dämpfungsglied 6 und einen Teil der Ölvorratskammer 7 enthält.

In einem zweiten Zylinder 1', der parallel zum ersten Zylinder 1 angeordnet und als Baueinheit mit ihm verbunden ist, befinden sich ein zweiter Abschnitt 4' der Ölkammer sowie der Trennkolben 5 und die Gaskammer 3.

Die Verbindung dieser beiden parallel zueinander angeordneten Zylinder 1 und 1' erfolgt über ein Verbindungselement 10, das eine hydraulische Verbindung 10.1 zwischen dem ersten Abschnitt 4 und dem zweiten Abschnitt 4' der Ölkammer enthält.

Ein dritter Zylinder 2, der teleskopartig und abgedichtet im ersten Zylinder 1 geführt ist, enthält den zweiten Teil der Ölvorratskammer 7. Durch Verschieben der beiden teleskopartig ineinander geführten Zylinder 1 und 2 ist der Rauminhalt der Ölvorratskammer 7 veränderbar.

Der erste Zylinder 1 und der zweite Zylinder 1' sind so angeordnet und miteinander verbunden, dass die über das Verbindungselement 10 miteinander verbundenen Enden im wesentlichen auf gleicher Höhe liegen. Man erkennt aus Fig. 1, dass sich hierdurch eine erhebliche Verkürzung der Gesamtbaulänge ergibt, indem die Länge des zweiten Zylinders 1' kleiner ist als die Gesamtlänge des ersten Zylinders 1 und des dritten Zylinders 2, und dies gilt für jeden Einfederungszustand des Federelements.

Am Verbindungselement 10 ist an der Außenseite eine als Befestigungslasche 8.1 ausgebildete Ankoppelvorrichtung angeordnet, während am äußeren Ende des dritten Zylinders 2 eine weitere Befestigungslasche 8.2 angeordnet ist. Diese ist so ausgebildet, dass sie aus zwei Teilen besteht, nämlich einem mit dem dritten Zylinder 2 verbundenen Basisteil 8.21 und einem mit dem Basisteil über Schraubverbindungen 8.23 verbundenen Kopfstück 8.22. Wie Fig. 1 zu entnehmen, ist diese Ausbildung so, dass das Durchgangsloch 8.3 der Befestigungslasche 8.2 in seiner einen Hälfte im Basisstück 8.21 und mit seiner anderen Hälfte im Kopfstück 8.22 liegt, so dass sich nach Abnehmen des Kopfstücks 8.22 das Durchgangsloch 8.3 nach außen öffnet. Dies hat bei der Montage und Demontage den großen Vorteil, dass das Federelement nicht seitlich auf einen Befestigungsbolzen aufgesteckt oder von ihm abgezogen werden muss, was bei engem Bauraum auf beträchtliche Schwierigkeiten stoßen kann, sondern dass bei abgenommenem Kopfstück 8.22 eine sehr viel leichtere Montage und Demontage möglich ist.

Am zweiten Zylinder 1' ist ein Ein/Ausgang 9.1 für die Gasfüllung der Gaskammer 3 angeordnet, während am dritten Zylinder 2 ein Ein/Ausgang 9.2 für die Ölfüllung angeordnet ist. Letzterer kann auch am ersten Zylinder 1 angeordnet sein.

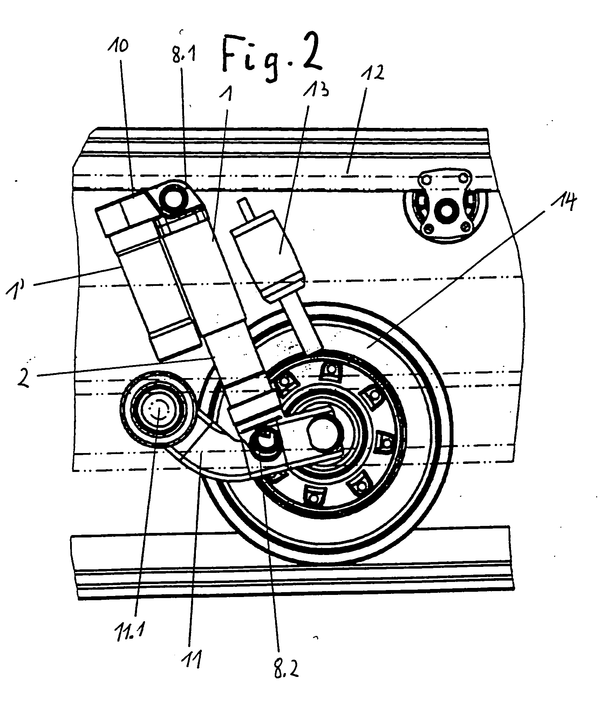

Fig. 2 zeigt, wie das in Fig. 1 dargestellte hydropneumatische Federelement an der Laufradaufhängung eines Kettenfahrzeugs eingesetzt werden kann. Ein Laufrad 14 ist an einer Schwinge 11 gelagert, die über ein Drehgelenk 11.1 schwenkbar am Fahrzeuggehäuse 12 bzw. am Laufwerkträger eines im übrigen nicht dargestellten Kettenfahrzeugs angeordnet ist. Der dritte Zylinder 2 des Federelements gem. Fig. 1 ist über die Befestigungslasche 8.2 mit der Schwinge 11 verbunden, während der erste Zylinder 1 über die Befestigungslasche 8.1 mit dem Fahrzeuggehäuse verbunden ist. Es ist der Fig. 2 ohne weiteres zu entnehmen, dass ein Federelement in gestreckter Bauweise an dieser Stelle nicht einbaubar wäre, sondern dass der vorhandene enge Bauraum nur mit der anhand von Fig. 1 geschilderten Bauweise des Federelements einen Einbau ermöglicht. Parallel zum Federelement ist außerdem ein hydropneumatischer Endanschlag 13 angeordnet.

## Patentansprüche

1. Hydropneumatisches Federelement für Fahrzeuge, insbesondere Kettenfahrzeuge, mit einer Gaskammer und einer Ölkammer, die innerhalb eines gemeinsamen zylindrischen Raumes angeordnet und durch einen in dem zylindrischen Raum abgedichtet und verschiebbar angeordneten Trennkolben voneinander getrennt sind, wobei die Ölkammer über ein hydraulisches Dämpfungsglied mit einer Ötvorratskammer verbunden ist, deren Innenraum in seiner Länge mittels zweier teleskopartig ineinander verschiebbar geführter, zylindrischer Rohrstücke veränderbar ist, **dadurch gekennzeichnet, dass** der die Gaskammer (3) und die Ölkammer (4-4') enthaltende zylindrische Raum auf den Innenraum von zwei parallel zueinander angeordneten und als Baueinheit miteinander verbundenen Zylindern (1, 1') verteilt ist, wobei in einem ersten Zylinder (1) das hydraulische Dämpfungsglied (6) sowie ein erster Abschnitt (4) der Ölkammer und ggf. ein Teil der Ölvorratskammer (7) angeordnet sind, während in dem parallel zum ersten Zylinder (1) angeordneten zweiten Zylinder (1') ein zweiter Abschnitt (4') der Ölkammer, der Trennkolben (5) und die Gaskammer (6) angeordnet sind und die beiden Abschnitte (4, 4') der Ölkammer hydraulisch miteinander verbunden sind, und der erste Zylinder (1) und ein die Ölvorratskammer (7) oder einen Teil von ihr enthaltender dritter Zylinder (2), die teleskopartig ineinander verschiebbaren Rohrstücke bilden.

2. Federelement nach Anspruch 1, **dadurch gekennzeichnet, dass** der erste und zweite Zylinder (1, 1') mechanisch und hydraulisch über ein Verbindungselement (10) derart miteinander verbunden sind, dass die hydraulischen, miteinander verbundenen Enden der Zylinder (1, 1') im wesentlichen auf gleicher Höhe liegen.

3. Federelement nach Anspruch 2, **dadurch gekennzeichnet, dass** eine erste mechanische Ankoppelvorrichtung (8.1) des Federelements an der Außenseite des Verbindungselements (10) und eine zweite mechanische Ankoppelvorrichtung (8.2) am freien Ende des dritten Zylinders (2) angeordnet ist und dass die Länge des zweiten Zylinders (1') kleiner ist als die Gesamtlänge des ersten und dritten Zylinders (1, 2) in jedem Einfederungszustand.

4. Federelement nach Anspruch 3, **dadurch gekennzeichnet, dass** die Ankoppelvorrichtungen (8.1, 8.2) als mit einem Durchgangsloch versehene Befestigungslaschen ausgebildet sind, wobei bei mindestens einer der Befestigungslaschen (8.2) die Lasche ein die eine Hälfte des Durchgangslochs (8.3) enthaltendes, abnehmbares Kopfstück (8.22) aufweist.

5. Laufradaufhängung an einem Kettenfahrzeug mit einer schwenkbar am Fahrzeuggehäuse (12) bzw. am Laufwerkträger des Kettenfahrzeugs angeordneten Schwinge (11), an deren freiem Ende das Laufrad (14) gelagert ist, und mit einem zwischen der Schwinge (11) und dem Fahrzeuggehäuse (12) angeordneten, hydropneumatischen Federelement, **dadurch gekennzeichnet, dass** das hydropneumatische Federelement nach einem der Ansprüche 1 bis 4 ausgebildet ist.

6. Laufradaufhängung nach Anspruch 5 in Verbindung mit Anspruch 2 oder 3, **dadurch gekennzeichnet, dass** das Verbindungselement (10) zwischen dem ersten und zweiten Zylinder (1, 1') an das Fahrzeuggehäuse (12) und der dritte Zylinder (2) an die Schwinge (11) angekoppelt ist.

7. Laufradaufhängung nach Anspruch 6 in Verbindung mit Anspruch 4, **dadurch gekennzeichnet, dass** die mit der Schwinge (11) verbundene Befestigungslasche (8.2) das abnehmbare Kopfstück (8.22) aufweist.

8. Laufradaufhängung nach einem der Ansprüche 5 bis 7, **dadurch gekennzeichnet, dass** parallel zum ersten und dritten Zylinder (1, 2) ein hydraulischer Endanschlag (13) angeordnet ist.
